# EUROPÄISCHE PATENTSCHRIFT

(11) **EP 0 371 189 B1**
(45) Veröffentlichungstag und Bekanntmachung des Hinweises auf die Patenterteilung: **15.11.1995**
(21) Anmeldenummer: 89107907.1
(22) Anmeldetag: 02.05.1989
(51) Int. Cl.: B01D 63/02, F28F 21/06

(54) **Hohlfadenmodul, Verfahren zu dessen Herstellung und Vorrichtung zur Durchführung des Herstellungsverfahrens**
Hollow fibre module, process for its manufacture and apparatus for carrying out said process
Module à fibres creuses, procédé de fabrication dudit module et appareil pour la mise en oeuvre dudit procédé de fabrication

(30) Priorität: 26.11.1988 DE 3839966
(43) Veröffentlichungstag der Anmeldung: 06.06.1990
(73) Patentinhaber: Akzo Nobel N.V., 6824 BM Arnhem (NL)
(72) Erfinder: Wollbeck, Rudi, D-8765 Erlenbach (DE); Zang, Thomas, D-8752 Goldbach (DE)
(74) Vertreter: Fett, Günter

(56) Entgegenhaltungen:
- EP-A- 0 206 130
- WO-A-87/06151
- DE-A- 1 959 394
- DE-A- 2 338 070
- FR-A- 2 214 502
- FR-A- 2 451 952
- GB-A- 2 135 902

## Beschreibung

Die Erfindung betrifft einen Hohlfadenmodul mit wenigstens einem Bündel aus U-förmig ausgebildeten Hohlfäden, bei dem beide Endbereiche eines jeden der Hohlfäden in einem Vergußmassekörper eingebettet sind und die an ihren beiden Enden offenen Hohlfäden auf der äußeren Stirnfläche des Vergußmassekörpers ausmünden, jedes Hohlfadenbündel aus Teilbündeln besteht und die Teilbündel unterschiedliche Längen aufweisen.

Derartige Hohlfadenmodule mit U-förmig - auch haarnadelförmig genannt - ausgebildeten Hohlfäden sind an sich bekannt, beispielsweise als sog. Dead-End-Filterkerzen, wobei die (mikro-) poröse Wand der Hohlfäden als das eigentliche Filtermittel wirkt.

So offenbart die DE-A-23 38 070 einen Hohlfadenmodul mit wenigstens einem Bündel aus U-förmig ausgebildeten Hohlfäden, bei welchem aber entweder mehrere Hohlfadenbündel, die nicht aus Teilbündeln bestehen, nebeneinander in einem Gehäuse angeordnet sind oder aber nur ein einziges Hohlfadenbündel, das aus maximal zwei Teilbündeln besteht, in einem Gehäuse angeordnet ist. Aus dieser Druckschrift folgt zudem, daß dort die Herstellung von kompakteren Geräten nur durch die Verwendung einer kreuzförmigen Seele möglich war. Diese Seele erstreckt sich vom Innern des Hohlfadenbündels nach außen bis an seine äußere Oberfläche und beansprucht damit einen großen Teil des freien Querschnitts des Gehäuses der Vorrichtung. Dieser Teil des Querschnitts des Gehäuses ist somit nicht mit Hohlfäden belegt. Zur Herstellung dieses Hohlfadenmoduls werden die beiden Teilbündel nacheinander durch Bildung eines Stranges hergestellt, der seinerseits erst noch durch das Aufwickeln von einzelnen Hohlfäden auf die Seele gebildet wird.

Hohlfäden mit einer dünnen Wand bzw. mit semipermeablen oder selektiven Eigenschaften werden in der Regel auch als Hohlfadenmembranen, Membranen in Hohlfadenform, bei geringen Durchmessern als Kapillarmembranen und ähnlich bezeichnet. Solche Membranen mit den zuletzt genannten Eigenschaften werden auch als nichtporöse oder dichte Membranen bezeichnet.

Bei Hohlfäden kann das Abtrennen (Filtern) von außen nach innen, d.h. in das Innere (Lumen) der Hohlfäden aber auch in umgekehrter Richtung erfolgen. Allen Dead-End-Trenneinrichtungen (Filtern) dieser Art ist dabei gemeinsam, daß das Filtrat bzw. Permeat bis zur Erschöpfung des Filtermittels kontinuierlich abgeführt werden kann, während der/die abgetrennte(n) (abgefilterte(n)) Teil(e) des Ausgangsmediums (Unfiltrat) in dem die Hohlfäden umgebenden Außenraum bzw. in den Hohlfäden verbleibt/verbleiben und sich ggf. auf der Filteroberfläche ablagert/ablagern u. ggf. eine Filterschicht (Filterkuchen) bildet/bilden und nicht wie beispielsweise bei der Cross-Flow-Filtration ebenfalls kontinuierlich abgeführt wird/werden. Daher der Name Dead-End.

Als nachteilig bei den bekannten Hohlfadenmodulen mit U-förmig ausgebildeten Hohlfäden hat es sich erwiesen, daß das Hohlfadenbündel im Bereich der im wesentlichen halbkreisförmigen Biegung der Hohlfäden ein wesentlich größeres Volumen einnimmt als im Bereich der Einbettung der Endbereiche der Hohlfäden. Je nach Anzahl der Hohlfäden haben solche Hohlfadenbündel daher eine stark ausgeprägte Birnenform. Dies hat zur Folge, daß das Gehäuse, in welches ein solcher Hohlfadenmodul eingebaut werden soll, wesentlich größere Abmessungen, bei einem rundem Querschnitt also einen wesentlich größeren Durchmesser, aufweisen muß, als die Abmessungen (der Durchmesser) des Vergußmassekörpers sie erfordern würden (würde). Das bedeutet, daß der Platzbedarf der bekannten Hohlfadenmodule mit U-förmig ausgebildeten Hohlfäden relativ groß ist, was bei großtechnischen Anlagen mit einer Vielzahl derartiger Hohlfadenmodule einen nicht unbeachtlichen Kostenanteil ausmacht.

Der vorliegenden Erfindung lag daher die Aufgabe zugrunde, einen gattungsgemäßen Hohlfadenmodul mit wesentlich geringerem Platzbedarf bei gleichbleibender Oberfläche zur Verfügung zu stellen.

Gelöst wurde die Aufgabe dadurch, daß bei einem Hohlfadenmodul der eingangs beschriebenen Art, erfindungsgemäß jedes Hohlfadenbündel aus mehr als zwei Teilbündeln besteht, daß die Hohlfäden wenigstens im Bereich der im wesentlichen halbkreisförmigen Biegung in Schichten angeordnet sind, daß zwei aufeinanderfolgende Teilbündel in unterschiedlichen Schichten angeordnet sind, daß die Schichten im wesentlichen parallel zur Längsachse des Moduls verlaufen, daß die Längsachsen der Schichten und die Längsachse des Moduls im wesentlichen zusammenfallen und daß die Schichten - in Längsrichtung betrachtet - einen Winkel miteinander bilden, sowie durch das Verfahren nach Anspruch 13.

Die Teilbündel können Hohlfäden mit innerhalb eines Teilbündels gleicher Länge aufweisen, so daß die Teilbündel dann unterschiedliche Längen aufweisen. Die Teilbündel können jedoch auch Hohlfäden unterschiedlicher Länge aufweisen, so daß sie dann aber trotzdem unterschiedliche mittlere Längen aufweisen. Es ist dabei also ohne weiteres möglich, daß einzelne Hohlfäden unterschiedlicher Teilbündel gleich lang sind, die gemittelte, also durchschnittliche Länge aller Hohlfäden eines Bündels ist aber in jedem Fall größer oder kleiner als die gemittelte (durchschnittliche) Länge eines anderen Teilbündels.

Dadurch, daß die Teilbündel sozusagen ineinandergeschachtelt angeordnet sind, wird für den Bereich, in dem die Hohlfäden im wesentlichen halbkreisförmig gebogen sind, weniger Platz (Volumen) benötigt.

Die Herstellung des Moduls erfolgt in der Weise, daß zunächst ein oder mehrere Hohlfadenbündel durch das nacheinander erfolgende Anordnen von Teilbündeln hergestellt wird bzw. werden, die Endbereiche der Hohlfäden dann beispielsweise in eine aushärtbare Vergußmasse eingebettet (eingeschleudert oder eingegossen) werden und nach dem Erhärten der Vergußmasse dann von der äußeren Stirnfläche des auf diese Weise gebildeten Vergußmassekörpers so viel abgetragen wird, bis die offenen Hohlfäden freigelegt sind. Die Hohlfäden können vor dem Einbetten noch oder bereits mit einem flüssigen und/oder festen Stoff oder Wirkstoff bzw. Medium gefüllt (worden) sein.

Die Hohlfäden der Teilbündel werden zum Zwecke des leichteren Verarbeitens vorzugsweise zusammengehalten, indem die Hohlfäden zuvor beispielsweise miteinander verklebt oder verschweißt oder mit einem Bindfaden zusammengebunden werden.

Die genaue Herstellung eines Hohlfadenbündels für den erfindungsgemäßen Hohlfadenmodul wird weiter unten (Figurenbeschreibung) beschrieben.

Bei dem erfindungsgemäßen Hohlfadenmodul können auch mehrere Hohlfadenbündel von einem gemeinsamen Vergußmassekörper gehalten werden, von denen jedes erfindungsgemäß aus mehr als zwei Teilbündeln besteht und die übrigen Merkmale von Anspruch 1 aufweist.

Durch den erfindungsgemäßen Hohlfadenmodul können beispielsweise sogenannte Beutelfilter (Bag-Filter) ersetzt werden, von denen häufig mehrere auf einem gemeinsamen Boden angeordnet sind, wobei der erfindungsgemäße Hohlfadenmodul darüber hinaus den Vorteil bietet, daß er eine wesentlich größere Filterfläche pro Volumen aufweist als die genannten Beutelfilter.

Das Hohlfadenbündel kann von einer Gewebe- oder Faservlieshülle umgeben, d.h. eingeschlossen, sein, welches bei Durchströmung der Hohlfäden von außen nach innen als Vorfilter wirkt. Das Hohlfadenbündel kann darüber hinaus alternativ oder zusätzlich zum Schutz gegen mechanische Beschädigungen von einem gitterförmigen Schutzmantel umgeben sein.

Die Teilbündel können auch aus Hohlfadenbändchen oder aus Hohlfadenmatten gebildet worden sein, die nach einem Web- oder Wirkverfahren hergestellt und anschließend zu Bündeln (=Teilbündeln) aufgerollt wurden, bevor sie zu einem Hohlfadenbündel für den erfindungsgemäßen Modul zusammengefügt werden.

Der Hohlfadenmodul kann mit Vorteil aber auch als Cross-Flow-(Mikro-)Filter oder als Stoff- und/oder Wärmeaustauscher ausgebildet und eingesetzt werden. Zu diesem Zweck sind die einen offenen Enden der Hohlfäden von deren anderen offenen Enden räumlich zu trennen, so daß ein Durchströmen der Hohlfäden möglich ist und das in die Hohlfäden eintretende gasförmige, dampfförmige oder flüssige Medium (Fluid) von dem aus den Hohlfäden austretenden getrennt gehalten werden kann. Dies geschieht beispielsweise durch eine auf der äußeren Stirnfläche des Vergußmassekörpers angeordnete Trennwand, die beispielsweise im Zusammenwirken mit einem den Modul umgebenden Gehäuse den an die Stirnfläche angrenzenden Raum in eine Zuführ- und Verteiler- und in eine Sammel- und Abführkammer unterteilt.

Geeignet ist ein derart ausgestalteter Hohlfadenmodul bei Verwendung entsprechender Hohlfäden zur Gastrennung oder zum Abtrennen von Gas aus Flüssigkeiten, welches in Form von Gasblasen oder auch in gelöster Form bzw. chemisch gebunden vorliegt. Für die Abtrennung von Gaskomponenten aus einem Gasgemisch werden dabei sogenannte nichtporöse Membranen, für das Abtrennen von Gasblasen aus einer Flüssigkeit dagegen in der Regel poröse bis mikroporöse Membranen verwendet. Bei der Entfernung gelöster oder chemisch gebundener Gase aus Flüssigkeiten können sowohl poröse als auch nichtporöse Membranen zur Anwendung kommen.

Es ist auch möglich, die Hohlfäden des Moduls mit einem festen, flüssigen, dampfförmigen und/oder gasförmigen Stoff zu füllen, die Hohlfäden anschließend zu verschließen und den so ausgestalteten Hohlfadenmodul dann einem Stoff- und/oder Wärmeaustausch zuzuführen.

Der Hohlfadenmodul ist vorzugsweise als austauschbare (Filter-)Kerze ausgestaltet, die lösbar in ein Gehäuse oder einen (offenen) Behälter eingebaut werden kann und bei Leistungsabfall bzw. nach Erschöpfung verworfen, gereinigt oder auf andere Weise regeneriert wird.

Das Hohlfadenbündel kann im Bereich der Modullängsachse einen sog. Kern oder ein ggf. perforiertes Kernrohr aufweisen oder aber auch kernlos sein.

Die Anzahl der Hohlfäden pro Bündel kann bei einer üblichen Filterkerze 2000 bis 2500 aber auch wesentlich mehr oder weniger betragen. Ein üblicher Füllgrad (Packungsdichte) liegt dabei im Bereich von 50 bis 60%. Ein geeigneter Hohlfadendurchmesser beträgt beispielsweise 0,6 mm innen und 1 mm außen. Die Länge der Filterkerze betrug in einem Beispiel ca. 215 mm (ca. 10 Zoll) und der Durchmesser ca. 65 mm.

Die Erfindung wird nun anhand der Zeichnung näher erläutert. Es zeigt in vereinfachter schematischer Darstellungsweise
- Figur 1: einen Hohlfadenmodul in Seitenansicht,
- Figur 2: einen Schnitt durch das Hohlfadenbündel in Figur 1,
- Figur 3: eine andere Ausführungsform des Hohlfadenmoduls im Längsschnitt,
- Figur 4: einen Hohlfadenmodul mit Hülle,
- Figur 5: einen Hohlfadenmodul mit Schutzmantel,
- Figur 6: einen in ein Gehäuse eingebauten Hohlfadenmodul,
- Figur 7: eine Vorrichtung zum Herstellen eines Hohlfadenbündels für den Hohlfadenmodul,
- Figur 8: die Stirnfläche eines Hohlfadenmoduls mit einer Trennwand in Draufsicht,
- Figur 9: das Hohlfadenbündelende im Bereich der Biegung in Draufsicht.

In den Figuren sind gleiche Teile mit gleichen Positionszahlen versehen; deshalb wird nicht bei jeder Figur jedes Teil erwähnt, wenn es zuvor schon mal erwähnt wurde.

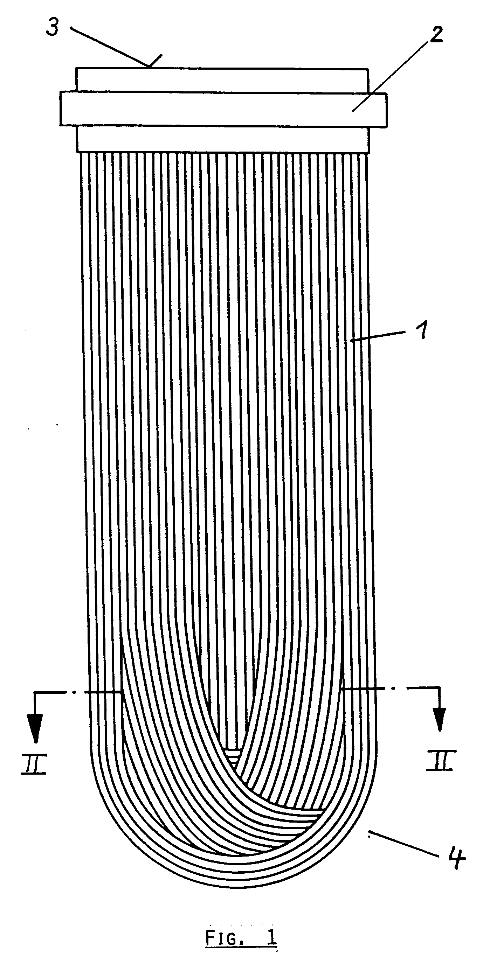

Der in Figur 1 dargestellte Hohlfadenmodul besteht aus den U-förmig (haarnadelförmig) ausgebildeten Hohlfäden 1, deren beide Endbereiche in dem flanschförmig ausgebildeten Vergußmassekörper 2 eingebettet sind. Die an ihren beiden Enden offenen Hohlfäden 1 münden auf der äußeren Stirnfläche 3 des Vergußmassekörpers 2 aus. In dem Bereich 4, in welchem die Hohlfäden 1 im wesentlichen halbkreisförmig gebogen sind, sind einzelne Teilbündel zu erkennen, aus denen das Hohlfadenbündel besteht. Ebenfalls deutlich zu erkennen ist, daß sich die Hohlfäden 1, die unterschiedlichen Teilbündeln angehören, in diesem Bereich 4 überkreuzen und einen Überkreuzungswinkel bilden.

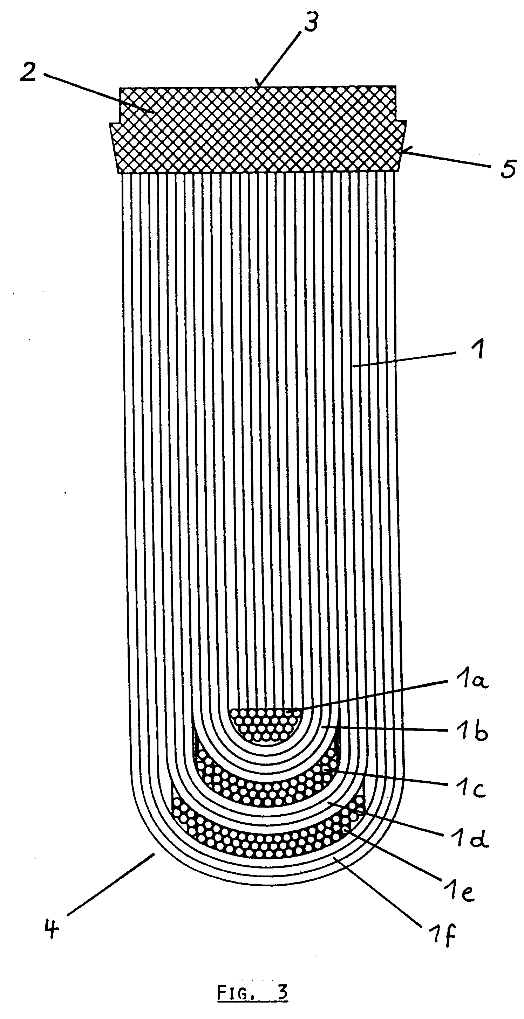

Figur 2 zeigt das Hohlfadenbündel nach Figur 1 im Querschnitt entlang der Linie II-II in Figur 1. Die Darstellung zeigt, daß das Hohlfadenbündel aus insgesamt fünf Teilbündeln 1a; 1b; 1c; 1d und 1e besteht. Durch die gestrichelten Linien sind drei Schichten angedeutet, in denen die Bereiche 4 angeordnet sind, in denen die Hohlfäden 1 im wesentlichen halbkreisförmig gebogen sind. Die Darstellung zeigt, daß die Schichten einen Winkel α miteinander bilden. Man könnte auch sagen, daß - in Längsrichtung des Hohlfadenmoduls betrachtet - die einzelnen Teilbündel wenigstens im Bereich der halbkreisförmigen Biegung der Hohlfäden jeweils um den Winkel α verdreht angeordnet sind.

In Figur 3 ist ein Hohlfadenmodul dargestellt, bei dem das Hohlfadenbündel aus insgesamt sechs Teilbündeln 1a bis 1f besteht. Die Schichten, in denen die halbkreisförmig gebogenen Bereiche 4 der Hohlfäden 1 angeordnet sind, bilden hierbei einen Winkel von im wesentlichen 90° miteinander. Der Vergußmassekörper 2 ist hierbei mit einer konisch ausgebildeten Dichtfläche 5 versehen.

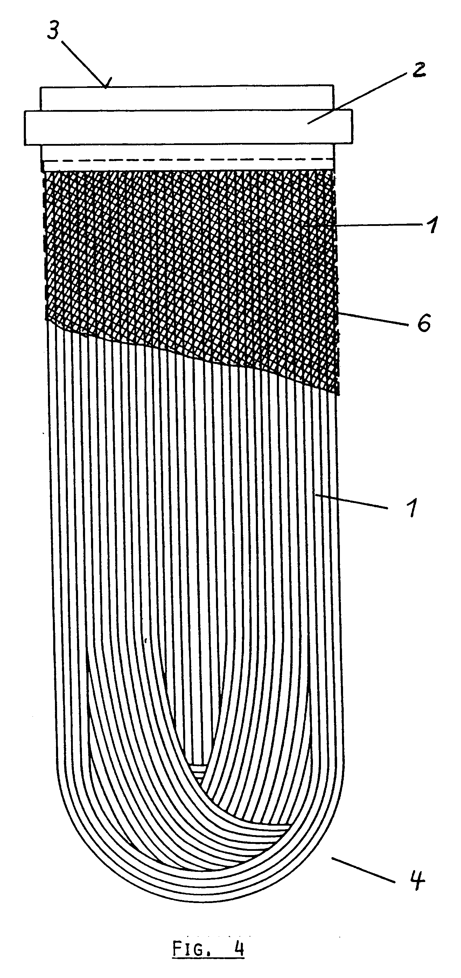

Der in Figur 4 dargestellte Hohlfadenmodul entspricht dem in Figur 1 dargestellten, wobei hierbei das Hohlfadenbündel von einer Hülle 6 eingeschlossen ist, die aus einem Gewebe, Gewirke, Vlies o.dgl. bestehen kann. Diese Umhüllung 6 ist jedoch nur teilweise dargestellt.

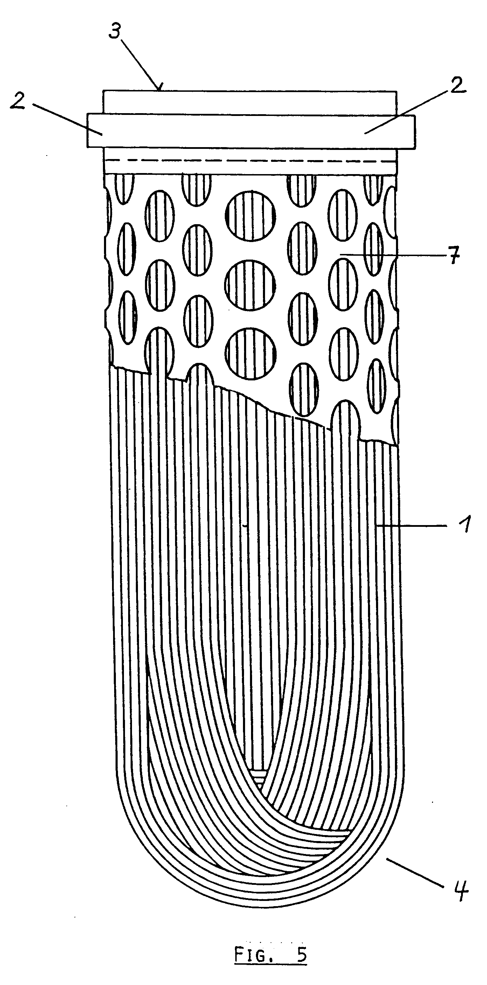

Figur 5 zeigt einen Hohlfadenmodul, der dem in Figur 1 dargestellten entspricht, wobei hierbei das Hohlfadenbündel zum Schutz gegen mechanische Beschädigung der Hohlfäden 1 mit einem perforierten Schutzmantel 7 umgeben ist. Der Schutzmantel 7 ist nur teilweise dargestellt.

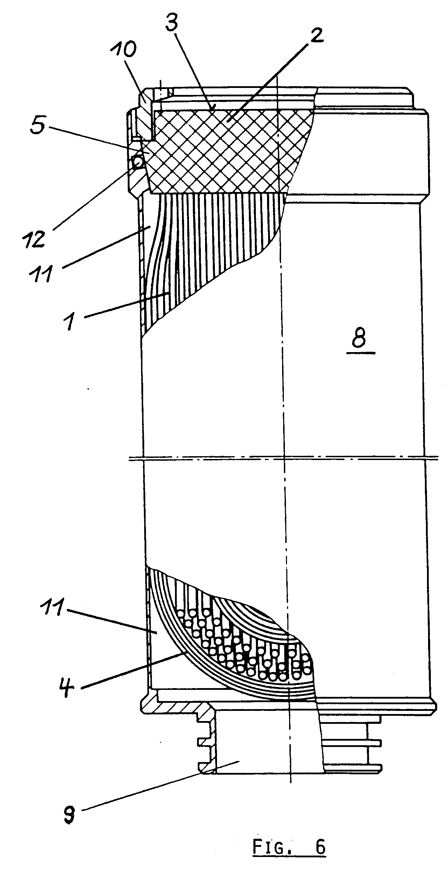

Figur 6 zeigt - in teilweise geschnittener Darstellungsweise - einen Hohlfadenmodul, der im wesentlichen dem in Figur 3 dargestellten entspricht, welcher in ein Gehäuse 8 lösbar eingebaut ist. An der in der Darstellung unteren Seite des Gehäuses 8 ist ein Anschlußadapter 9 angeordnet. Hier könnte genausogut ein Flansch oder ein anderes Verbindungselement vorgesehen sein. Im oberen Gehäuseteil ist der Hohlfadenmodul durch die Ringschraube 10 festgelegt. Die Abdichtung der die Hohlfäden 1 umgebenden Kammer 11 erfolgt mit Hilfe der O-Ring-Dichtung 12, die gegen die konische Dichtfläche 5 des Vergußmassekörpers 2 gedrückt wird.

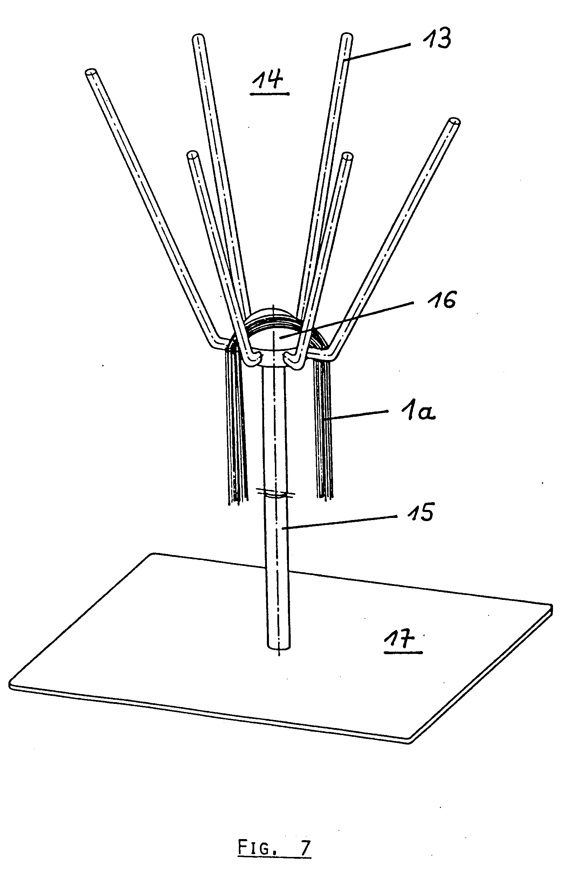

Die in Figur 7 dargestellte Vorrichtung zum Herstellen eines Hohlfadenbündels aus Teilbündeln für den Hohlfadenmodul besteht aus der Grundplatte 17, der senkrecht darauf befestigten Stange 15, an deren oberem Ende die kugelkalottenförmige Kappe 16 befestigt ist, und den sechs spinnenbeinförmig nach oben ragenden gleichmäßig verteilt angeordneten Stäben 13. Diese Vorrichtung gestattet es, ein Hohlfadenbündel herzustellen, bei dem die Schichten, die von den halbkreisförmig gebogenen Abschnitten der Hohlfäden gebildet werden, einen Winkel von 60° miteinander bilden. Hierbei können beliebig viele Teilbündel quasi übereinandergestapelt werden. Die halbkreisförmige Biegung in der Mitte der Hohlfäden wird durch die Kappe 16 unterstützt. Die Herstellung eines Hohlfadenbündels aus Teilbündeln geschieht auf folgende Weise: Ein erstes Teilbündel 1a wird durch die erste und vierte Lücke 14 zwischen den Stäben 13 eingelegt, so daß die Mitte der Hohlfäden im oberen Bereich der Kappe 16 aufliegt und die nicht gebogenen Abschnitte der Hohlfäden frei herunterhängen. Ein zweites Teilbündel (nicht dargestellt), deren Hohlfäden bereits jetzt eine größere (mittlere) Länge aufweisen können, wird nun in derselben Weise über das erste Teilbündel 1a, jedoch durch die zweite und fünfte Lücke 14 gelegt. Ein drittes Teilbündel (ebenfalls nicht dargestellt), für welches ansonsten das für das zweite Teilbündel Gesagte gilt, wird auf das zweite Teilbündel jedoch durch die dritte und sechste Lücke 14 gelegt. Nunmehr kann ein viertes Teilbündel wieder durch die erste und vierte Lücke 14 auf das dritte Teilbündel gelegt werden usw., bis ein Hohlfadenbündel mit der gewünschten Hohlfadenanzahl gebildet worden ist. Dieses kann dann in der gezeigten Darstellung nach oben herausgezogen werden, wozu zur Erleichterung zuvor die Stäbe 13 entfernt worden sein können. Anschließend erfolgt das Einbetten der Endbereiche der Hohlfäden in der weiter oben geschilderten und an sich bekannten Weise sowie die weitere Verarbeitung zu dem erfindungsgemäßen Hohlfadenmodul.

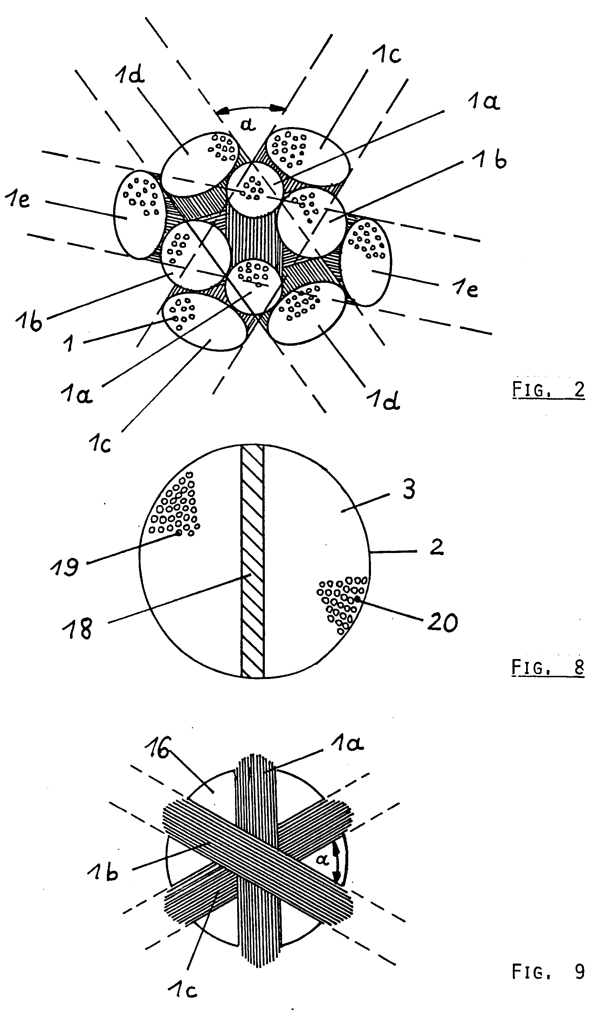

Figur 8 zeigt in Draufsicht die äußere Stirnfläche 3 des Vergußmassekörpers 2 eines Hohlfadenmoduls, bei welchem die einen offenen Enden 19 der Hohlfäden von deren anderen offenen Enden 20 durch die Trennwand 18 (geschnitten) räumlich getrennt werden, so daß ein Durchströmen der Hohlfäden von den offenen Enden 19 zu den offenen Enden 20 oder umgekehrt möglich ist. Im Zusammenwirken mit einem nicht dargestellten den Modul umgebenden Gehäuse unterteilt diese Trennwand 18 den an die äußere Stirnfläche 3 angrenzenden Raum, der von dem nicht dargestellten Gehäuse begrenzt wird, in eine Zuführ- und Verteiler- und in eine Sammel- und Abführkammer.

In Figur 9 ist das Ende eines Hohlfadenbündels im Bereich der im wesentlichen halbkreisförmigen Biegung der Hohlfäden in Draufsicht dargestellt, wobei das Hohlfadenbündel aus drei Teilbündeln, 1a, 1b und 1c besteht, wie es sich beispielsweise bei der Verwendung der in Figur 7 dargestellten Vorrichtung ergibt. Man erkennt wiederum sehr deutlich, daß die Schichten (gestrichelte Linien), in denen die gebogenen Bereiche der Hohlfäden angeordnet sind oder anders ausgedrückt, die Schichten, die durch diese Bereiche gebildet werden, einen Winkel α von 60° miteinander bilden.

## Patentansprüche

1. Hohlfadenmodul mit wenigstens einem Bündel aus U-förmig ausgebildeten Hohlfäden (1), bei dem beide Endbereiche eines jeden der Hohlfäden (1) in einem Vergußmassekörper (2) eingebettet sind und die an ihren beiden Enden (19; 20) offenen Hohlfäden (1) auf der äußeren Stirnfläche (3) des Vergußmassekörpers (2) ausmünden, jedes Hohlfadenbündel aus Teilbündeln (1a, 1b, ... 1f) besteht und die Teilbündel (1a, 1b, ... 1f) unterschiedliche Längen aufweisen, wobei jedes Hohlfadenbündel aus mehr als zwei Teilbündeln (1a, 1b, ... 1f) besteht, die Hohlfäden (1) wenigstens im Bereich (4) der im wesentlichen halbkreisförmigen Biegung in Schichten angeordnet sind, zwei aufeinanderfolgende Teilbündel (1a, 1b, ... 1f) in unterschiedlichen Schichten angeordnet sind, die Schichten im wesentlichen parallel zur Längsachse des Moduls verlaufen, die Längsachsen der Schichten und die Längsachse des Moduls im wesentlichen zusammenfallen und die Schichten - in Längsrichtung betrachtet - einen Winkel miteinander bilden.

2. Hohlfadenmodul nach Anspruch 1, gekennzeichnet durch eine auf der äußeren Stirnfläche (3) des Vergußmassekörpers (2) angeordnete Trennwand (18), durch welche die einen offenen Enden (19) der Hohlfäden (1) von deren anderen offenen Enden (20) räumlich getrennt werden.

3. Hohlfadenmodul nach Anspruch 1 und/oder 2, gekennzeichnet durch Hohlfäden (1) mit einer (mikro-)porösen Wand mit durchgehenden Poren.

4. Hohlfadenmodul nach Anspruch 1 und/oder 2, gekennzeichnet durch Hohlfäden (1) mit einer semipermeablen Wand.

5. Hohlfadenmodul nach Anspruch 1 und/oder 2, gekennzeichnet durch Hohlfäden (1) mit einer selektiv wirkenden Wand.

6. Hohlfadenmodul nach wenigstens einem der Ansprüche 1 bis 5, dadurch gekennzeichnet, daß die Hohlfäden (1) mit wenigstens einem flüssigen und/oder festen Stoff oder Wirkstoff gefüllt und ggf. verschlossen sind.

7. Hohlfadenmodul nach wenigstens einem der Ansprüche 1 bis 6, dadurch gekennzeichnet, daß das Hohlfadenbündel von einer - ggf. als Vorfilter wirkenden - Gewebe-, Gewirke- oder Faservlieshülle (6) umgeben ist.

8. Hohlfadenmodul nach wenigstens einem der Ansprüche 1 bis 7, dadurch gekennzeichnet, daß das Hohlfadenbündel mit einem Durchbrüche aufweisenden (perforierten), beispielsweise gitterförmigen, Schutzmantel (7) umgeben ist.

9. Hohlfadenmodul nach wenigstens einem der Ansprüche 1 bis 8, dadurch gekennzeichnet, daß die Teilbündel (1a, 1b, ... 1f) aus aufgerollten Hohlfadenbändchen gebildet sind.

10. Hohlfadenmodul nach wenigstens einem der Ansprüche 1 bis 8, dadurch gekennzeichnet, daß die Teilbündel (1a, 1b, ... 1f) aus aufgerollten Hohlfadenmatten gebildet sind.

11. Hohlfadenmodul nach wenigstens einem der Ansprüche 1 bis 10, dadurch gekennzeichnet, daß er als austauschbare Einheit (Kerze) ausgestaltet ist.

12. Vorrichtung nach einem der Ansprüche 1 bis 11, gekennzeichnet durch mehrere auf einem gemeinsamen Boden angeordnete Hohlfadenbündel.

13. Verfahren zur Herstellung eines Hohlfadenmoduls nach wenigstens einem der Ansprüche 1 bis 11, wobei wenigstens ein Hohlfadenbündel durch das nacheinander erfolgende Anordnen von mehr als zwei Teilbündeln hergestellt wird, indem ein erstes U-förmig ausgebildetes Teilbündel derart angeordnet wird, daß seine Hohlfäden wenigstens im Bereich der im wesentlichen halbkreisförmigen Biegung im wesentlichen schichtförmig angeordnet sind, danach ein zweites U-förmig ausgebildetes Teilbündel in gleicher Weise, jedoch derart angeordnet wird, daß die halbkreisförmig gebogenen Bereiche seiner Hohlfäden in einer anderen Schicht angeordnet sind, danach ein drittes Teilbündel und ggf. weitere Teilbündel in entsprechender Weise angeordnet wird bzw. werden, wobei die Schichten, in denen wenigstens die im wesentlichen halbkreisförmig gebogenen Bereiche der Hohlfäden der Teilbündel angeordnet sind, im wesentlichen parallel zur Längsachse des Moduls verlaufen, die Längsachsen der Schichten und die Längsachse des Moduls im wesentlichen zusammenfallen und die Schichten - in Längsrichtung betrachtet - einen Winkel miteinander bilden, so daß sich die Hohlfäden, die unterschiedlichen Teilbündeln angehören, in dem halbkreisförmig gebogenen Bereich überkreuzen und einen Überkreuzungswinkel bilden, wobei anschließend die Endbereiche der Hohlfäden in eine aushärtbare Vergußmasse eingebettet werden und wobei nach dem Erhärten der Vergußmasse von der äußeren Stirnfläche des auf diese Weise gebildeten Vergußmassekörpers so viel abgetragen wird, bis die offenen Hohlfäden freigelegt sind.

14. Verfahren nach Anspruch 13, dadurch gekennzeichnet, daß ein Teilbündel in Form eines auf dem Kopf stehenden U, d.h. mit nach unten hängenden Hohlfadenenden, angeordnet wird, wenigstens ein zweites Teilbündel in derselben Weise, jedoch um die gemeinsame Längsachse der Teilbündel verdreht über das erste Teilbündel gelegt wird und ggf. wenigstens ein weiteres Teilbündel in entsprechender Weise über das jeweils zuvor gelegte Teilbündel gelegt wird.

15. Vorrichtung zur Durchführung des Verfahrens nach den Ansprüchen 13 und 14, bestehend aus einer Grundplatte (17), einer senkrecht darauf befestigten Stange (15), einer an deren oberen Ende befestigten kugelkalottenförmigen Kappe (16) und mindestens sechs spinnenbeinförmig nach oben ragenden, auf der Kappe (16) gleichmäßig verteilt angeordneten Stäben (13).

16. Verwendung des Hohlfadenmoduls nach wenigstens einem der Ansprüche 1 bis 11 zur Filtration gasförmiger, dampfförmiger oder flüssiger Suspensionen.

17. Verwendung des Hohlfadenmoduls nach wenigstens einem der Ansprüche 1 bis 11 zur Cross-Flow-Filtration (Querstromfiltration).

18. Verwendung des Hohlfadenmoduls nach wenigstens einem der Ansprüche 1 bis 11 zur Gastrennung.

19. Verwendung des Hohlfadenmoduls nach wenigstens einem der Ansprüche 1 bis 11 zum Abtrennen von Gas aus Flüssigkeiten.

20. Verwendung des Hohlfadenmoduls nach wenigstens einem der Ansprüche 1 bis 11 zum Stoff- und/oder Wärmeaustausch.

## Claims

1. Hollow filament module having at least one bundle of hollow filaments (1) formed in a U-shape, wherein both ends of each of the hollow filaments (1) are embedded in a part (2) formed from a casting compound and the hollow filaments (1), which are open at both ends (19; 20), exit onto the outer face (3) of the part (2) formed from a casting compound, each bundle of hollow filaments comprises partial bundles (1a, 1b, ... 1f) and the partial bundles (1a, 1b, ... 1f) are of different lengths, with each bundle of hollow filaments comprising more than two partial bundles (1a, 1b, ... 1f), the hollow filaments (1) at least in the region (4) of the substantially semicircular bend being arranged in layers, two successive partial bundles (1a, 1b, ... 1f) being arranged in different layers, the layers running substantially parallel to the longitudinal axis of the module, the longitudinal axes of the layers and the longitudinal axis of the module substantially coinciding and the layers - viewed lengthwise - forming an angle with each other.

2. Hollow filament module according to claim 1, characterised by a partition (18) arranged on the outer face (3) of the part (2) formed from a casting compound, by which partition the open ends (19) of the hollow filaments (1) are spatially separated from the other open ends (20) thereof.

3. Hollow filament module according to claim 1 and/or 2, characterised by hollow filaments (1) having a (micro)porous wall containing pores which extend therethrough.

4. Hollow filament module according to claim 1 and/or 2, characterised by hollow filaments (1) having a semipermeable wall.

5. Hollow filament module according to claim 1 and/or 2, characterised by hollow filaments (1) having a selectively acting wall.

6. Hollow filament module according to at least one of claims 1 to 5, characterised in that the hollow filaments (1) are filled with at least one liquid and/or solid material or active substance and are if necessary closed.

7. Hollow filament module according to at least one of claims 1 to 6, characterised in that the bundle of hollow filaments is surrounded by a covering (6) composed of woven, knitted or nonwoven fabric and if necessary acting as a prefilter.

8. Hollow filament module according to at least one of claims 1 to 7, characterised in that the bundle of hollow filaments is surrounded by a protective covering (7) containing openings (perforated), for example, a latticed protective covering.

9. Hollow filament module according to at least one of claims 1 to 8, characterised in that the partial bundles (1a, 1b, ... 1f) are formed from small rolled-up bands of hollow filaments.

10. Hollow filament module according to at least one of claims 1 to 8, characterised in that the partial bundles (1a, 1b, ... 1f) are formed from rolled-up mats of hollow filaments.

11. Hollow filament module according to at least one of claims 1 to 10, characterised in that it is designed as a replaceable unit (cartridge).

12. Device according to any one of claims 1 to 11, characterised by several bundles of hollow filaments arranged on a common base.

13. Process for the production of a hollow filament module according to at least one of claims 1 to 11, whereby at least one bundle of hollow filaments is produced by the successive arrangement of more than two partial bundles, by arranging a first U-shaped partial bundle in such a way that the hollow filaments thereof at least in the region of the substantially semicircular bend are arranged substantially in layers, and then arranging a second U-shaped partial bundle in the identical manner but in such a way that the bent semicircular regions of the hollow filaments thereof are arranged in another layer, and then arranging a third partial bundle and if necessary a further partial bundle or bundles in the corresponding manner, with the layers, in which at least the substantially semicircular bent regions of the hollow filaments of the partial bundles are arranged, running substantially parallel to the longitudinal axis of the module and with the longitudinal axes of the layers and the longitudinal axis of the module substantially coinciding and the layers - viewed lengthwise - forming an angle with each other, so that the hollow filaments, which belong to different partial bundles, cross in the semicircular bent region and form an angle at the crossing point, with the ends of the hollow filaments subsequently being embedded in a curable casting compound, and, following the hardening of the casting compound, with so much of the part thus formed from the casting compound being removed from the outer face until the open hollow filaments are exposed.

14. Process according to claim 13, characterised in that a partial bundle is arranged in the form of an inverted U, that is, with the ends of the hollow filaments hanging downwards, at least a second partial bundle is arranged in the same manner, but is laid across the first partial bundle twisted around the common longitudinal axis of the partial bundles and if necessary at least one more partial bundle is placed in the corresponding manner across the respectively previously placed partial bundle.

15. Device for carrying out the process according to claims 13 and 14, comprising a base plate (17), a rod (15) attached vertically thereto and having a spherical cap (16) attached at its upper end, and at least six bars (13) projecting upwards in spider-legged form, arranged evenly distributed on the cap (16).

16. Use of the hollow filament module according to at least one of claims 1 to 11 for the filtration of gaseous, vaporous or liquid suspensions.

17. Use of the hollow filament module according to at least one of claims 1 to 11 for cross-flow filtration.

18. Use of the hollow filament module according to at least one of claims 1 to 11 for gas separation.

19. Use of the hollow filament module according to at least one of claims 1 to 11 for the separation of gas from liquids.

20. Use of the hollow filament module according to at least one of claims 1 to 11 for the exchange of materials and/or heat.

## Revendications

1. Module à fils creux comprenant au moins un faisceau de fils creux (1) conformés en U, module dans lequel les deux zones d'extrémité de chacun des fils creux (1) sont noyées dans un corps de masse de scellement (2) et les fils creux (1) ouverts à leurs deux extrémités (19, 20) débouchent sur la surface frontale extérieure (3) du corps de masse de scellement (2), chaque faisceau de fils creux se compose de faisceaux partiels (1a, 1b, ... 1f) et les faisceaux partiels (1a, 1b, ... 1f) présentent des longueurs différentes, chaque faisceau de fils creux se composant de plus de deux faisceaux partiels (1a, 1b, ... 1f), les fils creux (1) étant disposés en couches au moins dans la zone (4) de la courbure essentiellement demi-circulaire, deux faisceaux partiels (1a, 1b, ... 1f) successifs étant disposés dans des couches différentes, les couches s'étendant essentiellement parallèlement à l'axe longitudinal du module, les axes longitudinaux des couches et l'axe longitudinal du module étant essentiellement confondus et les couches, considérées dans la direction longitudinale, faisant un angle les unes avec les autres.

2. Module à fils creux suivant la revendication 1, caractérisé par une paroi de séparation (18) qui est disposée sur la face frontale extérieure (3) du corps de masse de scellement (2) et par laquelle les premières extrémités ouvertes (19) des fils creux sont séparées dans l'espace des secondes extrémités ouvertes (20).

3. Module à fils creux suivant la revendication 1 et/ou 2, caractérisé par des fils creux (1) avec une paroi (micro-) poreuse à pores traversants.

4. Module à fils creux suivant la revendication 1 et/ou 2, caractérisé par des fils creux (1) avec une paroi semi-perméable.

5. Module à fils creux suivant la revendication 1 et/ou 2, caractérisé par des fils creux (1) avec une paroi à action sélective.

6. Module à fils creux suivant au moins l'une des revendications 1 à 5, caractérisé par le fait que les fils creux sont remplis avec au moins une substance liquide et/ou solide, ou substance active , et sont le cas échéant obturés.

7. Module à fils creux suivant au moins l'une des revendications 1 à 6, caractérisé par le fait que le faisceau de fils creux est entouré d'une enveloppe (6) en tissu, tricot ou non-tissé de fibres, agissant le cas échéant comme préfiltre.

8. Module à fils creux suivant au moins l'une des revendications 1 à 7, caractérisé par le fait que le faisceau de fils creux est entouré d'une cage de protection (7) munie de passages (perforés), par exemple en forme de grille.

9. Module à fils creux suivant au moins l'une des revendications 1 à 8, caractérisé par le fait que les faisceaux partiels (1a, 1b, ... 1f) sont constitués par des bandelettes de fils creux enroulées.

10. Module à fils creux suivant au moins l'une des revendications 1 à 8, caractérisé par le fait que les faisceaux partiels (1a, 1b, ... 1f) sont constitués par des nappes de fils creux enroulées.

11. Module à fils creux suivant au moins l'une des revendications 1 à 10, caractérisé par le fait qu'il est réalisé sous la forme d'une unité (bougie) échangeable.

12. Dispositif suivant l'une des revendications 1 à 11, caractérisé par plusieurs faisceaux de fils creux disposés sur un fond commun.

13. Procédé pour la fabrication d'un module à fils creux suivant au moins l'une des revendications 1 à 11, suivant lequel au moins un faisceau de fils creux est produit par agencement successif de plus de deux faisceaux partiels par le fait qu'un premier faisceau partiel conformé en U est disposé de manière que ses fils creux soient disposés essentiellement en forme de couches au moins dans la zone de la courbure essentiellement demi-circulaire, qu'un deuxième faisceau partiel conformé en U est ensuite disposé de la même manière, mais de sorte que les zones incurvées en demi-cercle de ses fils creux soient disposées dans une autre couche, qu'ensuite un troisième faisceau partiel et le cas échéant d'autres faisceaux partiels est (ou sont) disposé(s) de manière correspondante, les couches dans lesquelles sont disposées au moins les zones incurvées essentiellement en demi-cercle des fils creux des faisceaux partiels s'étendant essentiellement parallèlement à l'axe longitudinal du module, les axes longitudinaux des couches et l'axe longitudinal du module coïncidant essentiellement et les couches, considérées dans la direction longitudinale, faisant un angle les unes avec les autres, de manière que les fils creux qui appartiennent aux différents faisceaux partiels se croisent dans la zone incurvée en demi-cercle et fassent un angle de croisement, les zones d'extrémité des fils creux étant ensuite noyées dans une masse de scellement durcissable et cette dernière, après durcissement, étant enlevée sur la face frontale extérieure du corps de masse de scellement ainsi formé, jusqu'à ce que les fils creux ouverts soient dégagés.

14. Procédé suivant la revendication 13, caractérisé par le fait qu'un faisceau partiel est disposé sous la forme d'un U renversé, c'est-à-dire avec les extrémités des fils creux pendant vers le bas, au moins un deuxième faisceau partiel est posé sur le premier faisceau partiel, de la même manière, mais avec décalage angulaire autour de l'axe longitudinal commun des faisceaux partiels, et, le cas échéant, au moins un autre faisceau partiel est posé de manière correspondante sur le faisceau partiel posé préalablement.

15. Dispositif pour la mise en oeuvre du procédé suivant les revendications 13 et 14, comprenant une plaque de base (17), une tige (15) fixée verticalement sur cette plaque, une coiffe (16) en forme de calotte sphérique, fixée sur l'extrémité supérieure de la tige, et au moins six barreaux (13) répartis uniformément sur la coiffe (16) et dépassant cette dernière vers le haut à la manière de pattes d'araignée.

16. Utilisation du module à fils creux suivant au moins l'une des revendications 1 à 11, pour la filtration de suspensions gazeuses, sous forme de vapeur ou liquides.

17. Utilisation du module à fils creux suivant au moins l'une des revendications 1 à 11, pour la filtration cross-flow (filtration en courants croisés).

18. Utilisation du module à fils creux suivant au moins l'une des revendications 1 à 11, pour la séparation de gaz.

19. Utilisation du module à fils creux suivant au moins l'une des revendications 1 à 11, pour la séparation de gaz a partir de liquides.

20. Utilisation du module à fils creux suivant au moins l'une des revendications 1 à 11, pour l'échange de matière et/ou de chaleur.
